# EUROPÄISCHE PATENTANMELDUNG

(11) **EP 4 733 993 A1**
(43) Veröffentlichungstag der Anmeldung: **29.04.2026**
(21) Anmeldenummer: 25207986.8
(22) Anmeldetag: 10.10.2025
(51) Int. Cl.: G06N 3/0464, G06N 3/08, G06N 20/10

(54) **VERFAHREN ZUM BESTIMMEN ZUMINDEST EINER VORHERSAGEGÜTE FÜR ZUMINDEST EINEN DATENPUNKT IN EINEM EINGABERAUM FÜR EIN NEURONALES NETZWERK, COMPUTERPROGRAMMPRODUKT, COMPUTERLESBARES SPEICHERMEDIUM SOWIE ELEKTRONISCHE RECHENEINRICHTUNG**

(30) Priorität: 24.10.2024 DE 102024210272
(71) Anmelder: Siemens Mobility GmbH, 80997 München (DE)
(72) Erfinder: Kaukewitsch, Christof, 81739 München (DE); Rothbauer, Stefan, 80997 München (DE)
(74) Vertreter: Siemens Patent Attorneys

(57) **Zusammenfassung**

Die Erfindung betrifft ein Verfahren zum Bestimmen einer Vorhersagegüte (32) für zumindest einen Datenpunkt (36) in einem Eingaberaum für ein neuronales Netzwerk (20) mittels einer elektronischen Recheneinrichtung (18), mit den Schritten: Vorgeben des auf Basis von Datensätzen (26, 28) trainierten und validierten neuronalen Netzwerks (20); (S1) Vorgeben des zumindest einen Datenpunktes (36); (S2) Bestimmen von zumindest einer Ähnlichkeit des vorgegebenen Datenpunktes (36) mit zumindest einem weiteren Datenpunkt der Datensätze (26, 28); (S3) Bestimmen von zumindest einem weiteren Datenpunkt der Datensätze (26, 28) in Abhängigkeit von der bestimmten Ähnlichkeit; (S4) Bestimmen von zumindest einem Konfidenzwert (30) des zumindest einen bestimmten weiteren Datenpunkts; (S5) Bestimmen der Vorhersagegüte (32) für den zumindest einen Datenpunkt (36) in Abhängigkeit von dem zumindest einem bestimmten Konfidenzwert (30) für den zumindest einen weiteren Datenpunkt und in Abhängigkeit von der zumindest einen Ähnlichkeit. (S6) Ferner betrifft die Erfindung ein Computerprogrammprodukt, ein computerlesbares Speichermedium sowie eine elektronische Recheneinrichtung (18).

## Beschreibung

Die nachfolgende Erfindung betrifft ein Verfahren zum Bestimmen zumindest einer Vorhersagegüte für zumindest einen Datenpunkt in einem Eingaberaum für ein neuronales Netzwerk mittels einer elektronischen Recheneinrichtung gemäß dem geltenden Patentanspruch 1. Ferner betrifft die Erfindung ein entsprechendes Computerprogrammprodukt, ein computerlesbares Speichermedium sowie eine elektronische Recheneinrichtung.

Komplexe technische Systeme für zum Beispiel Objekterkennung und -verfolgung, dem sogenannten Tracking, sind von herausragender Bedeutung für beispielsweise militärische, sicherheitskritische, verkehrstechnische und industrielle Anwendungen. Eine besondere Relevanz erhält Object Tracking hierbei beim autonomen Fahren, sei es straßen- oder schienengebunden. Da hier auch sicherheitsrelevante Aspekte zu berücksichtigen sind, können Fehler beim Object Tracking dazu führen, dass die aktuelle Verkehrssituation falsch eingeschätzt wird. Dies kann sowohl die Sicherheit der Verkehrsteilnehmer als auch die Verfügbarkeit der technischen Anwendung einschränken.

Bei komplexen technischen Anwendungen, wie zum Beispiel dem Object Tracking, entstehen Unsicherheiten, deren quantitative Bewertung in Bezug auf eine Sicherheitsnachweisführung besonders herausfordernd ist. Aktuell ist es schwierig beziehungsweise nicht möglich, den Nachweis zu führen, dass eine solche Anwendung hinreichend sicher ist. Dies gilt insbesondere, wenn zum Beispiel datengetriebene Prozesse, beispielsweise Machine Learning, involviert sind.

Maschinelle Lernverfahren, wie neuronale Netze, zeigen für eine Reihe von Aufgaben, zum Beispiel im Bereich der Objekterkennung, gute Ergebnisse. Typisch ist hierbei ein hochdimensionaler Eingaberaum, die sogenannte Operational Design Domain (ODD). Die Verfahren nutzen eine große Menge an Daten für Training und Validierung, diese sind jedoch im Vergleich zum Eingaberaum dennoch klein.

Bisher ist der Einsatz in sicherheitsrelevanten Anwendungen von neuronalen Netzen kaum möglich, da es für gegebene Eingabedaten keine Garantien gibt, dass die Ergebnisse korrekt sind.

Üblicherweise wird die Komplexität einer Sicherheitsfunktion auf ein mögliches Minimum reduziert und durch häufig genutzte sowie bekannte Technologie umgesetzt. Deshalb stützt sich die klassische quantitative Sicherheitsnachweisführung auf eine Analyse der dedizierten Sicherheitsfunktionen, die zum Beispiel in einem Fehlerbaum übersichtlich dargestellt werden kann. In komplizierten Fällen, in denen zum Beispiel die Reihenfolge des Auftretens von Ereignissen relevant ist, werden für eine Modellierung auch Markov-Ketten herangezogen.

Im Falle komplexer Systeme, zum Beispiel für die Objektdetektion und Tracking, kann umfangreiches Testen, zum Beispiel begleitete Testfahrten in einer Zielumgebung, die Sicherheitsnachweisführung unterstützen.

Kommt bei der Implementierung der Sicherheitsfunktion eine künstliche Intelligenz zum Einsatz, ist eine verlässliche Gütebewertung des neuronalen Netzes erstrebenswert.

Zur globalen Bewertung des neuronalen Netzes werden in der Regel Performanz-Metriken verwendet.

Für die Bewertung der Ergebnisse des neuronalen Netzwerkes zur Laufzeit werden in der Regel Konfidenzwerte ausgegeben, diese sind jedoch nicht unabhängig vom Ergebnis entstanden und bieten somit in der Regel nur eingeschränkt zusätzliche Gewissheit, was insbesondere bei sicherheitsrelevanten Anwendungen oft nicht nutzbar ist.

Zur Bewertung der Eingangsdatensätze werden statistische Methoden, wie die sogenannte Otlier Detection oder Out-of-Distribution-Detection, eingesetzt, die erkennen sollen, ob ein Datensatz in den durch das Training abgedeckten Bereich des Eingaberaums (ODD) fällt.

Aufgabe der vorliegenden Erfindung ist es, ein Verfahren, ein Computerprogrammprodukt, ein computerlesbares Speichermedium sowie eine elektronische Recheneinrichtung zu schaffen, mittels welchen eine Bewertung einer zu erwartenden Güte des neuronalen Netzwerks für zumindest einen Datenpunkt bestimmt werden kann.

Diese Aufgabe wird durch ein Verfahren, ein Computerprogrammprodukt, ein computerlesbares Speichermedium sowie eine elektronische Recheneinrichtung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Bestimmen zumindest einer Vorhersagegüte für zumindest einen Datenpunkt in einem Eingaberaum für ein neuronales Netzwerk mittels einer elektronischen Recheneinrichtung. Es wird das auf Basis von Datensätzen trainierte und validierte neuronales Netzwerk vorgegeben. Es erfolgt das Vorgeben des zumindest einen Datenpunktes mittels der elektronischen Recheneinrichtung. Es wird zumindest eine Ähnlichkeit des vorgegebenen Datenpunktes mit zumindest einem weiteren Datenpunkt der Datensätze bestimmt. Es erfolgt ein Bestimmen von zumindest einem weiteren Datenpunkt der Datensätze in Abhängigkeit von der bestimmten Ähnlichkeit. Es wird ein Konfidenzwert des zumindest einen bestimmten weiteren Datenpunkts bestimmt. Es erfolgt dann das Bestimmen der Vorhersagegüte für den Datenpunkt in Abhängigkeit von dem zumindest einen bestimmten Konfidenzwert für den zumindest einen weiteren Datenpunkt und in Abhängigkeit von der zumindest einen Ähnlichkeit.

Insbesondere kann somit eine weitere Kenngröße, die zur Laufzeit oder auch vorab die Bewertung der erwarteten Vorhersagegüte des neuronalen Netzwerks für einen spezifischen Eingabedatensatz/Datenpunkt ermittelt, bestimmt werden. Dies ist insbesondere für sicherheitsrelevante Anwendungen hilfreich, um den Einsatz des neuronalen Netzwerks in Sicherheitsfunktionen zu implementieren und eine hohe Verfügbarkeit in den mithilfe des neuronalen Netzes implementierten Anwendungen zu gewährleisten.

Insbesondere ermöglicht somit die vorliegende Erfindung eine "lokale" Vorhersagegüte beziehungsweise Güteprognose des neuronalen Netzwerks (NN) für spezifische Eingabedaten im Eingaberaum (Operational Design Domain - ODD). Es wird damit ein von den vorhandenen Konfidenzmaßen weitgehend unabhängiger zusätzlicher Indikator verfügbar. Durch den Vergleich dieser Werte kann das Vertrauen, dass ein Ergebnis des neuronalen Netzes korrekt ist, erhöht werden oder umgekehrt auch erkannt werden, wenn ein hohes Vertrauen nicht gerechtfertigt ist. Damit kann das Ergebnis entsprechend verwendet werden, um zum Beispiel in sicherheitsrelevanten Anwendungen zielgerichtet zu reagieren und somit die Sicherheit oder Verfügbarkeit zu steigern. Auf Basis der Vorhersagegüte kann durch die geeignete Wahl von Punkten in dem Eingaberaum eine globale Güteprognose errechnet werden, die gegebenenfalls auch die erwartete Verteilung von Eingangsdaten für interessante Anwendungsfälle berücksichtigt.

Voraussetzung für das Verfahren ist insbesondere, dass ein Distanzmaß auf dem Eingaberaum (ODD) vorhanden ist. Das Training des neuronalen Netzwerks kann dabei insbesondere gemäß dem Stand der Technik mittels eines Trainingsdatensatzes erfolgen. Die Validierung des neuronalen Netzes erfolgt ebenfalls gemäß Stand der Technik insbesondere mit einem Validierungsdatensatz. Das neuronale Netzwerk gibt neben dem reinen Klassifikationsergebnis auch die Konfidenz in dem Ergebnis zurück. Die Konfidenz ist damit für jeden Eingabedatensatz durch Anwendung des neuronalen Netzes ermittelbar. Trainings- und Validierungsdatensätze beinhalten das korrekte Ergebnis, den sogenannten Ground Truth. Für jeden Datensatz aus Trainingsdaten und Validierungsdaten ist damit feststellbar, ob diese durch das neuronale Netz korrekt oder falsch klassifiziert wurde.

Insbesondere ist somit Ziel der vorliegenden Erfindung, einen spezifischen Datenpunkt im Eingaberaum, insbesondere außerhalb des Trainingsdatensatzes und des Validierungsdatensatzes, bezüglich des zu erwartenden Vertrauens zu bewerten, in der das Ergebnis korrekt ist.

Mögliche Anwendungen des Verfahrens können dabei beispielsweise sein, dass die Vorhersagegüte in Verbindung mit der Konfidenz des neuronalen Netzwerks in der anwendungsspezifischen Logik verwendet wird, um die Vertrauenswürdigkeit zum Beispiel einer Klassifikation zu erhöhen und damit zum Beispiel die Sicherheitskriterien der Applikation zu optimieren. Auch eine Analyse der erwarteten lokalen Performanz des neuronalen Netzwerks über den Eingaberaum ist ermöglicht. Hierfür können vorab für alle Werte des Eingaberaums die Güteprognose/Vorhersagegüte, beispielsweise rasterweise, berechnet werden. Dies ist gegebenenfalls sehr rechenintensiv, und gegebenenfalls nur abhängig von einer Diskretisierung des Eingaberaums möglich. Dies kann für Analyse von kritischen Bereichen genutzt werden, beispielsweise ein häufiger Wechsel der Güteprognose auf einem kleinen Raum, zum Beispiel gemäß dem Distanzmaß. Als Ergebnis erfolgt die Kenntnis von Bereichen des Eingaberaums, in denen erhöhte Vorsicht notwendig ist. Gegebenenfalls können diese Bereiche verbessert werden, indem weitere Trainingsdaten erzeugt werden, und das neuronale Netzwerk hiermit nachtrainiert wird. Vorab berechnete Werte können gegebenenfalls in zeitkritischen Applikationen zur Laufzeit vorteilhaft sein.

Mithilfe der lokalen Vorhersagegüte lässt sich auch eine globale Vorhersagegüte berechnen. Hierfür werden gemäß einer für die Anwendung sinnvollen Verteilung Punkte des Eingaberaums ausgewählt. Dies kann gleichmäßig verteilt über den gesamten Eingaberaum, insbesondere in Form eines Rasters, erfolgen, gemäß einer Dichte, die der Verteilung der Eingabedaten in der Anwendung entspricht, gemäß eines Risikoprofils, zum Beispiel gemäß der Sicherheitsrelevanz, oder anderen anwendungsspezifisch relevanten Größen.

Durch das vorgeschlagene Verfahren können insbesondere die Vorteile erreicht werden, dass eine zusätzliche, unabhängige Metrik zur Laufzeit für die lokale Bewertung des Vertrauens in die Korrektheit des Ergebnisses von einem neuronalen Netzwerk mit einfließt. Es ermöglicht die Analyse des Eingaberaums auf potentiell unsicher zu bewertende Bereiche. Die Ermittlung von möglichem zusätzlichem Bedarf zur Erweiterung von Trainingsdaten ist ebenfalls gegeben. Eine Erhöhung des Vertrauens in die Korrektheit des Ergebnisses des neuronalen Netzwerkes wird dadurch unterstützt. Die Implementierung von zuverlässigen und verfügbaren sicherheitskritischen Anwendungen, wie zum Beispiel bei der Objekterkennung und - verfolgung, wird dadurch erleichtert. Des Weiteren kann eine Unterstützung bei der Sicherheitsnachweisführung (Safety Case) für den Einsatz von neuronalen Netzen in sicherheitsrelevanten Anwendungen realisiert werden.

Ein Eingaberaum (Operational Design Domain - ODD) ist dabei ein von beispielsweise dem Hersteller definierter Bereich, in dem beispielsweise ein automatisiertes Kraftfahrzeug sicher und zuverlässig betrieben werden kann. Dabei können folgende Faktoren berücksichtigt werden: Umgebungsbedingungen: Hierzu gehören Faktoren wie Wetter, Lichtverhältnisse, Straßenbeschaffenheit und Verkehrsdichte. Betriebsbereich: Der Betriebsbereich definiert die Arten von Straßen, auf denen das Kraftfahrzeug fahren kann, zum Beispiel Autobahn, Stadtstraßen oder Privatgrundstücke, oder beispielsweise schienengebunden. Geschwindigkeitsbereich: Hier wird festgelegt, welche Geschwindigkeiten das Fahrzeug sicher fahren kann. Verkehrsteilnehmer: Es werden die Arten von Verkehrsteilnehmern definiert, mit denen das Kraftfahrzeug umgehen kann, wie zum Beispiel andere Autos, Fußgänger, Fahrradfahrer und Tiere. Systeme und Sensoren: Der Eingaberaum legt fest, welche Sensoren und Systeme zur Wahrnehmung der Umgebung und zum Steuern des Kraftfahrzeugs erforderlich sind. Einsatzszenarien: Hier werden die Situationen definiert, in denen das Kraftfahrzeug sicher betrieben werden kann, wie zum Beispiel Ein- und Ausfahren, Abbiegen und Überholen. Insgesamt dient der ODD dazu, klare Grenzen für den Einsatz automatisierter Fahrzeuge zu definieren und so die Sicherheit und Zuverlässigkeit dieser Systeme zu gewährleisten.

Gemäß einer vorteilhaften Ausgestaltungsform werden Trainingsdatensätze und Validierungsdatensätze als Datensätze vorgegeben. Insbesondere bei der Entwicklung von neuronalen Netzwerken spielen Trainings- und Validierungsdatensätze eine entscheidende Rolle. Diese Datensätze werden verwendet, um das neuronale Netzwerk zu trainieren und seine Leistung zu bewerten. Ein Trainingsdatensatz besteht dabei aus einer Menge von Eingabedaten und den dazugehörigen Ausgaben, die als Zielwert bezeichnet werden. Das neuronale Netzwerk wird dann darauf trainiert, die Ausgaben für die gegebenen Eingabedaten vorherzusagen. Dazu wird eine Verlustfunktion definiert, die misst, wie gut das Netzwerk die Zielausgaben vorhersagt. Durch Anpassung der Gewichte und Verzerrungen in den Neuronen des neuronalen Netzwerks wird versucht, den Verlust zu minimieren und so das Netzwerk zu verbessern. Ein Validierungsdatensatz hingegen besteht aus einer separaten Menge von Eingabedaten und Ausgaben, die nicht während des Trainingsprozesses verwendet werden. Stattdessen wird der Validierungsdatensatz nach jedem Trainingsdurchlauf verwendet, um die Leistung des Netzwerks zu bewerten. Dazu wird das neuronale Netzwerk aufgefordert, die Ausgaben für die Eingabedaten im Validierungsdatensatz vorherzusagen, und der Verlust wird berechnet. Durch Vergleich des Verlusts im Trainings- und Validierungsdatensatz kann überprüft werden, ob das neuronale Netzwerk überbeansprucht wird oder überprüft werden, ob Overfitting oder Underfitting auftreten. Die Aufteilung der verfügbaren Daten in einen Trainings- und Validierungsdatensatz ist wichtig, um sicherzustellen, dass das Netzwerk auf unbekannte Daten angewendet werden kann, ohne, dass Overfitting oder Underfitting auftreten. Beispielsweise kann der Trainingsdatensatz mit 80 Prozent der verfügbaren Daten und der Validierungsdatensatz mit den restlichen 20 Prozent der Daten gefüllt sein. Es ist dabei auch wichtig sicherzustellen, dass die Daten in beiden Datensätzen repräsentativ für die tatsächliche Anwendung, also dem Eingaberaum, des Netzwerks sind und alle relevanten Merkmale und Variationen abdecken. Andernfalls kann es zu Fehlern oder Überanpassungen kommen, was sich negativ auf die Leistung des Netzwerks auswirken kann.

Es hat sich weiterhin als vorteilhaft erwiesen, wenn ein Abstand des Datenpunktes zum weiteren Datenpunkt und/oder eine Zugehörigkeit des weiteren Datenpunkts zu einem Trainingsdatensatz oder zu einem Validierungsdatensatz und/oder ein Konfidenzwert des weiteren Datenpunkts zur Bestimmung der Ähnlichkeit genutzt werden. Insbesondere werden somit die bekannten Ergebnisse der bewertungsrelevanten Datenpunkte genutzt, um eine Prognose für die zu erwartende Güte des neuronalen Netzwerks zu erhalten. Hierzu können beispielsweise die Gewichte der jeweiligen Ergebnisse der bewertungsrelevanten Punkte unter Berücksichtigung von Abstand, Konfidenz und Ursprung, beispielsweise Trainingsdatensatz oder Validierungsdatensatz, genutzt werden.

Eine weitere vorteilhafte Ausgestaltungsform sieht vor, dass eine Kategorie des Eingaberaums und/oder eine Kritikalität der Datensätze zur Bestimmung der Ähnlichkeit genutzt werden. Insbesondere können somit auch weitere geeignete Kriterien genutzt werden, beispielsweise sogenannte Label des Eingaberaums sowie die Priorität beziehungsweise die Kritikalität des Datensatzes für die Anwendung. Unter dem Label des Eingaberaums, also der Kategorie des Eingaberaums, kann insbesondere eine Bezeichnung oder eine Kategorie verstanden werden, die vom Hersteller vorgegeben wird, um den Bereich zu beschreiben, in dem beispielsweise ein Kraftfahrzeug sicher und zuverlässig betrieben werden kann. Das Label hilft dabei, klare Grenzen für den Einsatz des Kraftfahrzeugs zu definieren und ermöglicht es Benutzern, die Fähigkeiten und Einschränkungen des Kraftfahrzeugs besser zu verstehen. Das Label des Eingaberaums kann verschiedene Aspekte des Betriebsbereichs, der Umgebungsbedingungen, der Verkehrsteilnehmer, der Systeme und Sensoren, der Einsatzszenarien und andere Faktoren umfassen, die für den sicheren und zuverlässigen Betrieb des Fahrzeugs wichtig sind. Beispiele für Label von Eingaberäumen sind Stadtverkehr bei trockener Witterung und guten Lichtverhältnissen; Autobahnfahrt bei Tag und Nacht mit mäßiger Verkehrsdichte; Privatgrundstück mit langsamer Fahrgeschwindigkeit und bekannter Umgebung; Einfahrt in einen Bahnhof oder dergleichen. Insgesamt kann das Label für den Eingaberaum eine präzise, aussagekräftige und eindeutige Definition sein, um sicherzustellen, dass Benutzer die Einsatzmöglichkeiten und -grenzen des automatisierten Fahrzeugs verstehen.

In einer weiteren vorteilhaften Ausgestaltungsform ist vorgesehen, dass eine Vielzahl von weiteren Datenpunkten in Abhängigkeit von der Ähnlichkeit bestimmt wird und eine Vielzahl von jeweiligen Konfidenzwerten bestimmt wird, wobei in Abhängigkeit von der jeweiligen Ähnlichkeit eine Gewichtung der Konfidenzwerte durchgeführt wird und die Vorhersagegüte in Abhängigkeit von den gewichteten Konfidenzwerten bestimmt wird. Somit erfolgt die Bewertung der Vorhersagegüte nicht in Abhängigkeit eines einzigen weiteren Datenpunktes, sondern beispielsweise auch in Abhängigkeit von der Vielzahl von weiteren Datenpunkten. Mit anderen Worten wird die Ähnlichkeit zwischen dem Datenpunkt und einer Vielzahl von weiteren Datenpunkten, welche beispielsweise einen gewissen Abstand, beispielsweise unterhalb eines gewissen Schwellwerts, liegen, verglichen. Es werden nun von den innerhalb des Schwellwerts liegenden weiteren Datenpunkten die Konfidenzwerte bestimmt und entsprechend der Ähnlichkeit gewichtet. Die Vorhersagegüte kann nun in Abhängigkeit von dieser Vielzahl von Konfidenzwerten und in Abhängigkeit von den entsprechenden Gewichtungen bestimmt werden.

Es hat sich weiterhin als vorteilhaft erwiesen, wenn die Vorhersagegüte um einen Wert von einschließlich null bis einschließlich eins bestimmt wird. Insbesondere kann somit die Vorhersagegüte im Wesentlichen normiert dargestellt werden. Null kann dabei beispielsweise bedeuten, dass keine Vorhersage möglich ist, während eins bedeutet, dass die Vorhersagegüte sehr hoch ist und im Wesentlichen dem Wert vertraut werden kann. Insbesondere ist es somit für einen Nutzer oder einem nachgelagerten System des neuronalen Netzwerks auf einfache Art und Weise ermöglicht, die Vorhersagegüte abzuschätzen.

Ebenfalls vorteilhaft ist, wenn eine Vielzahl von Vorhersagegüten für eine Vielzahl von Datenpunkten bestimmt wird und auf Basis der Vielzahl von Vorhersagegüten eine Gesamtvorhersagegüte für das neuronale Netzwerk bestimmt wird. Somit kann im Wesentlichen das gesamte neuronale Netzwerk bezüglich der Vorhersagegüte validiert beziehungsweise bewertet werden. Somit kann ein weiterer Faktor geschaffen werden, welcher es ermöglicht, eine Bewertung des neuronalen Netzwerks im Gesamten durchzuführen. Dies ermöglicht beispielsweise, dass entschieden werden kann, dass ein weiteres Training des neuronalen Netzwerks notwendig ist, um die entsprechende Gesamtvorhersagegüte zu verbessern.

Es hat sich weiterhin als vorteilhaft erwiesen, wenn die Bestimmung der zumindest einen Vorhersagegüte mittels zumindest eines weiteren Validierungsdatensatzes validiert wird. Eine Validierung der Vorhersagegüte ist beispielsweise anhand eines weiteren Datensatzes durch statistische Tests möglich. Somit kann sichergestellt werden, dass die Vorhersagegüte auch die gewünschten Eigenschaften hat.

Dabei hat es sich weiterhin als vorteilhaft erwiesen, wenn als weiterer Validierungsdatensatz ein ungenutzter Teil des Datensatzes verwendet wird. Beispielsweise kann ein ungenutzter Teil des Validierungsdatensatzes verwendet werden. Somit werden beispielsweise beim entsprechenden Validierungsdatensatz Datenpunkte zurückgehalten, um diese für die Validierung der Vorhersagegüte zu nutzen. Somit ist es nicht notwendig, zusätzliche Datensätze zu erzeugen, sondern es kann auf Basis der bereits existierenden Datensätze auch die Vorhersagegüte entsprechend validiert werden.

Es hat sich weiterhin als vorteilhaft erwiesen, wenn für jedes Datum des weiteren Validierungsdatensatzes zumindest eine Güteprognose und/oder eine Klassifikation und/oder eine Konfidenz der Klassifikation bestimmt wird und auf Basis einer Korrelation dieser bestimmten Werte die Validierung durchgeführt wird. Insbesondere kann somit zur Validierung für jedes Datum des Validierungsdatensatzes für die Güteprognose, welches vorliegend dem weiteren Validierungsdatensatz entspricht, die Güteprognose beziehungsweise die Einstufung bestimmt werden, die Klassifikation bezüglich der Korrektheit beziehungsweise Nichtkorrektheit, sowie die Konfidenz des neuronalen Netzwerks bei der Klassifikation. Nun kann eine Korrelation mit beispielsweise erstens der Einstufung der Güteprognose und der korrekten Klassifikation ermittelt werden beziehungsweise aus der Einstufung der Güteprognose und der Konfidenz, um sicherzustellen, dass die Güteprognose die gewünschten Eigenschaften hat. Alternativ können auch Schwellwerte zur Einstufung der Güteprognose anhand dieses Datensatzes optimiert werden.

Ferner hat es sich als vorteilhaft erwiesen, wenn das neuronale Netzwerk für eine Objekterkennung bereitgestellt wird. Die Objektdetektion/Objekterkennung ist dabei insbesondere ein Prozess, bei dem Objekte in einer Szene erkannt und ihre Position und Größe bestimmt werden. Dies ist eine wichtige Anwendung in vielen Bereichen, wie beispielsweise Computervision, Robotik und maschinellem Lernen. Maschinelles Lernen kann für die Objektdetektion eingesetzt werden, indem maschinelle Lern-Modelle trainiert werden, um Muster in Bilddaten zu erkennen und daraus auf die Anwesenheit von Objekten zu schließen. Dabei können verschiedene Arten von maschinellen Lern-Modellen zum Einsatz kommen, wie zum Beispiel neuronale Netze oder Support Vector Machines. Ein typisches Verfahren zur Objektdetektion mit maschinellem Lernen ist das Training eines konvoluten neuronalen Netzwerks, einem speziellen Typen von einem neuronalen Netzwerk, um Bildmerkmale zu extrahieren und daraus auf die Anwesenheit von Objekten zu schließen. Dabei werden im konvoluten neuronalen Netzwerk während des Trainings viele Beispiele vorgelegt, die aus Bildern mit an notierten Objekten bestehen. Das konvolute neuronale Netzwerk lernt dann, Merkmale in den Bilddaten zu erkennen, die auf die Anwesenheit von Objekten hinweisen. Sobald das konvolute neuronale Netzwerk trainiert ist, kann es auf neue Bilder angewendet werden, um Objekte darin zu detektieren. Dabei durchläuft das Bild Schritt für Schritt das konvolute neuronale Netzwerk, wobei in jedem Schritt Merkmale extrahiert und bewertet werden, ob sie auf ein bestimmtes Objekt hindeuten. Wenn genügend Merkmale für ein Objekt gefunden wurden, wird dies als erkannt markiert und seine Position und Größe bestimmt. Insgesamt kann maschinelles Lernen dazu beitragen, die Genauigkeit und Effizienz zur Objektdetektion zu verbessern und somit viele Anwendungen im Bereich wie Computer Vision, Robotik und autonomes Fahren ermöglichen.

In einer weiteren vorteilhaften Ausgestaltungsform ist es vorgesehen, dass das neuronale Netzwerk für eine Objekterkennung auf einem beweglichen Trägersystem, insbesondere für ein Kraftfahrzeug, insbesondere für einen Zug, bereitgestellt wird. Es sind selbstverständlich auch weitere Kraftfahrzeuge wie beispielsweise Personenkraftwagen, Lastkraftwagen, Flugzeug, Schiff, Satellit oder dergleichen möglich. Die Objekterkennung ist dabei ein wesentlicher Bestandteil der Sensorik und Wahrnehmung von Kraftfahrzeugen, insbesondere im Kontext autonomer Züge. Dabei geht es darum, andere Verkehrsteilnehmer, wie Fußgänger, Fahrradfahrer, Autos, Lkws und auch andere Züge zu erkennen und ihre Position, Geschwindigkeit und Richtung im Verhältnis zum eigenen Kraftfahrzeug zu bestimmen. Insbesondere die Erkennung von anderen Zügen ist wichtig, um Kollisionen und Unfälle zu vermeiden. Autonome Züge sind schwere und große Fahrzeuge, die bei Kollisionen erhebliche Schäden verursachen können. Kollisionen können auch zum Entgleisen von Zügen führen, was ein hohes Schadenspotenzial nach sich zieht. Darüber hinaus haben sie oft lange Bremswege und benötigen viel Zeit, um auf sich ändernde Verkehrsbedingungen zu reagieren. Im autonomen Zugbetrieb ist die Objekterkennung von entscheidender Bedeutung, um eine sichere und effiziente Fahrt zu gewährleisten. Das System muss in der Lage sein, andere Verkehrsteilnehmer, wie andere Züge, Autos, Lkws, Fußgänger und Fahrradfahrer zu erkennen und ihre Position und Geschwindigkeit im Verhältnis zum eigenen Fahrzeug zu bestimmen. Dabei müssen verschiedene Faktoren berücksichtigt werden, wie zum Beispiel die Größe und Form der Objekte, die Lichtverhältnisse, Wetterbedingungen und andere Umgebungsfaktoren. Ein Beispiel für die Bedeutung der Objekterkennung im autonomen Zugbetrieb ist das Passieren von Bahnübergängen oder Kreuzungen. Hier muss das System in der Lage sein, herannahende Züge und andere Fahrzeuge rechtzeitig zu erkennen und eine sichere Entscheidung darüber zu treffen, ob es sicher passieren kann oder ob es anhalten muss. Dabei müssen verschiedene Sicherheitsmaßnahmen getroffen werden, wie zum Beispiel die Abschaltung der automatischen Fahrfunktion und die Übertragung der Kontrolle an den Menschen, wenn das System eine potentielle Kollision erkennt. Zusammenfassend ist die Objekterkennung ein wesentlicher Bestandteil des autonomen Zugbetriebs, um eine sichere und effiziente Fahrt zu gewährleisten. Durch die Erkennung von anderen Verkehrsteilnehmern, wie Zügen, Autos, Lkws, Fußgängern und Fahrradfahrern kann das System potentielle Kollisionen vermeiden und eine sichere Reise gewährleisten.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Weiterhin betrifft die Erfindung auch ein computerlesbares Speichermedium mit dem Computerprogrammprodukt nach dem vorhergehenden Aspekt.

Ein nochmals weiterer Aspekt der Erfindung betrifft eine elektronische Recheneinrichtung zum Bestimmen zumindest einer Vorhersagegüte für zumindest einen Datenpunkt in einem Eingaberaum für ein neuronales Netzwerk, wobei die elektronische Recheneinrichtung zum Durchführen eines Verfahrens nach dem vorhergehenden Aspekt ausgebildet ist. Insbesondere wird das Verfahren mittels der elektronischen Recheneinrichtung durchgeführt.

Weiterhin betrifft die Erfindung ein Trägersystem, insbesondere ein Kraftfahrzeug, insbesondere einen Zug, mit zumindest einer elektronischen Recheneinrichtung nach dem vorhergehenden Aspekt.

Vorteilhafte Ausgestaltungsformen des Verfahrens sind als vorteilhafte Ausgestaltungsformen des Computerprogrammprodukts, des computerlesbaren Speichermediums, der elektronischen Recheneinrichtung sowie des Trägersystems anzusehen. Die elektronische Recheneinrichtung sowie das Trägersystem weisen hierzu gegenständliche Merkmale auf, um entsprechende Verfahrensschritte durchführen zu können.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Hier und im Folgenden kann ein künstliches neuronales Netzwerk als Softwarecode verstanden werden, der auf einem computerlesbaren Speichermedium gespeichert ist und eines oder mehrere vernetzte künstliche Neuronen repräsentiert beziehungsweise deren Funktion nachbilden kann. Der Softwarecode kann dabei auch mehrere Softwarecodekomponenten beinhalten, die beispielsweise unterschiedliche Funktionen haben können. Insbesondere kann ein künstliches neuronales Netzwerk ein nichtlineares Modell oder einen nichtlinearen Algorithmus implementieren, das beziehungsweise der eine Eingabe auf eine Ausgabe abbildet, wobei die Eingabe durch einen Eingangsmerkmalsvektor oder eine Eingangssequenz gegeben ist und die Ausgabe beispielsweise eine ausgegebene Kategorie für eine Klassifizierungsaufgabe, einen oder mehrere prädizierte Werte oder eine prädizierte Sequenz beinhalten kann.

Computervision beschäftigt sich dabei insbesondere mit der automatischen Verarbeitung in Relation von visuellen Informationen. Das Ziel von Computervision ist es, Computersystemen beizubringen, Objekte, Personen, Szenen und Handlungen in digitalen Bildern und Videos zu erkennen, zu klassifizieren und darauf zu reagieren. Computervision-Systeme verwenden Algorithmen und Techniken aus dem Bereich des maschinellen Lernens, Mustererkennung und Signalverarbeitung, um visuelle Informationen zu verarbeiten und zu interpretieren. Dazu gehört insbesondere die Bildvorverarbeitung, die eine Verbesserung und Normalisierung von Bildern, zum Beispiel Rauschunterdrückung, Farbbalance, Winkelkorrektur und Skalierung umfasst. Ein weiterer Teil ist die Merkmalsextraktion, welche die Erkennung und die Extraktion relevanter Merkmale aus Bildern, zum Beispiel Kanten, Texturen, Form und Farben umfasst. Ferner wird die Objekterkennung durchgeführt, welche insbesondere die Identifizierung und Klassifizierung von Objekten in den Bildern beinhaltet, zum Beispiel Gesichter, Fahrzeuge, Gebäude und Landschaften. Eine Szenenanalyse ist ebenfalls Teil, wobei die Analyse und Interpretation von Szenen, beispielsweise die Erkennung von Handlungen, Bewegungen und Beziehungen zwischen Objekten, umfasst. Der Einsatz von Algorithmen des maschinellen Lernens ist dabei insbesondere vorgesehen, um Computervision-Systeme zu trainieren und ihre Leistung zu verbessern. Computervision und somit auch das erfindungsgemäße Verfahren hat zahlreiche Anwendungen in verschiedenen Bereichen wie beispielsweise Robotik, Medizin, Landwirtschaft, Sicherheit, Unterhaltung, Verkehr und vielen anderen. Durch die Weiterentwicklung von Techniken und Algorithmen wird Computervision immer leistungsfähiger und kann komplexe Aufgaben automatisieren und vereinfachen, weshalb solche Techniken insbesondere im Bereich von Kraftfahrzeugen, insbesondere im Bereich von Zügen, zuverlässig eingesetzt werden können.

Für Anwendungsfälle oder Anwendungssituationen, die sich bei einem erfindungsgemäßen Verfahren ergeben können und die hierin nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale und Merkmalskombinationen der Erfindung ergeben sich aus den Figuren und deren Beschreibungen sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind.

Dabei zeigen:
- FIG 1: eine schematische Seitenansicht einer Ausführungsform eines Trägersystems mit einer Ausführungsform einer elektronischen Recheneinrichtung;
- FIG 2: ein schematisches Blockschaltbild gemäß einer Ausführungsform einer elektronischen Recheneinrichtung; und
- FIG 3: ein schematisches Ablaufdiagramm gemäß einer Ausführungsform des Verfahrens.

In den Figuren sind gleiche oder funktionsgleiche Schritte mit den gleichen Bezugszeichen versehen.

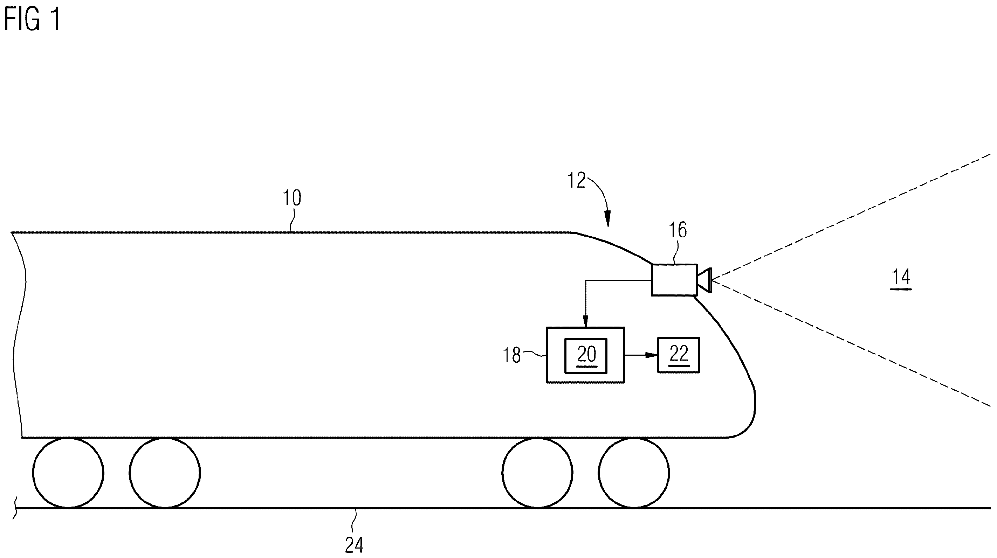

FIG 1 zeigt eine schematische Seitenansicht einer Ausführungsform eines Trägersystems, insbesondere eines Zuges 10, mit einer Objekterkennungseinrichtung 12 zum Erkennen von Objekten in einer Umgebung 14 des Trägersystems, insbesondere des Zugs 10. Vorliegend weist die Objekterkennungseinrichtung 12 zumindest eine Sensoreinrichtung 16, beispielsweise in Form einer Kamera, auf. Des Weiteren ist eine elektronische Recheneinrichtung 18 gezeigt, welche ein neuronales Netzwerk 20 aufweist, insbesondere zur Auswertung der Umgebung 14. Auf Basis der Auswertung der Umgebung 14 mittels des neuronalen Netzwerks 20 kann beispielsweise eine Funktionseinheit 22 angesteuert werden, beispielsweise eine Bremseinrichtung des Zuges 10, um entsprechende Gegenmaßnahmen einleiten zu können oder Warnmeldungen zu erzeugen.

Bei dem vorliegenden Ausführungsbeispiel ist, wie bereits erwähnt, das Kraftfahrzeug als Zug 10 ausgebildet und insbesondere fährt der Zug 10 auf Schienen 24 und ist somit schienengebunden. Es ist selbstverständlich, dass die Objekterkennungseinrichtung 12 auch für andere Kraftfahrzeuge, beispielsweise Automobile, Schiffe, Flugzeuge oder auch Satelliten oder dergleichen eingesetzt werden kann.

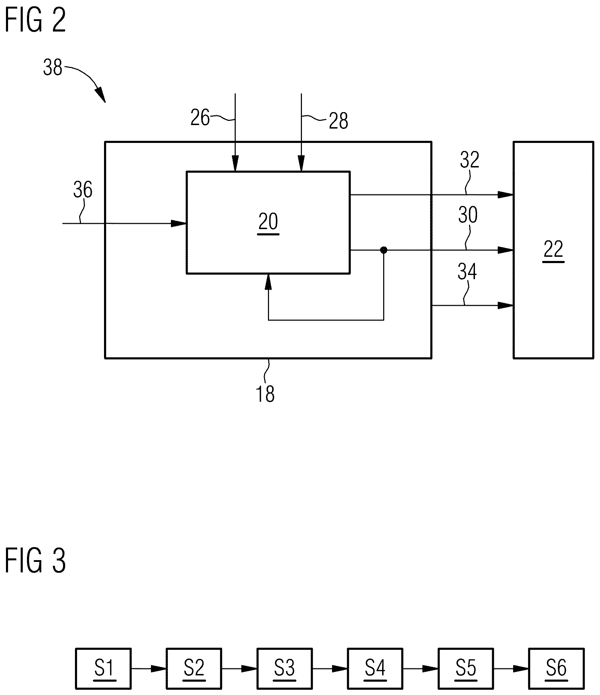

FIG 2 zeigt ein schematisches Blockschaltbild gemäß einer Ausführungsform der elektronischen Recheneinrichtung 18. Die elektronische Recheneinrichtung 18 weist das neuronale Netzwerk 20 auf. Das neuronale Netzwerk 20 ist beispielsweise über zumindest einen Trainingsdatensatz 26 trainiert worden und mittels zumindest eines Validierungsdatensatzes 28 validiert worden. Das neuronale Netzwerk 20 ist zum Ausgeben eines Konfidenzwerts 30 ausgebildet. Der Konfidenzwert 30 kann wiederum rückgekoppelt werden und ist im vorliegenden Ausführungsbeispiel insbesondere dafür vorgesehen, auch eine Vorhersagegüte 32 zu erzeugen, welche ebenfalls ausgegeben werden kann. Der Konfidenzwert 30 und die Vorhersagegüte 32 können dann wiederum beispielsweise an die Funktionseinheit 22, beispielsweise in Form einer fahrdynamische Einrichtung, übergeben werden, wobei die fahrdynamische Einrichtung dann auf Basis dieser Werte wiederum Entscheidungen treffen kann, welche Fahrmanöver eingeleitet werden. Alternativ kann die elektronische Recheneinrichtung 18 selbst auf Basis der Konfidenzwerte 30 und der Vorhersagegüte 32 Steuersignale 34 erzeugen, welche einen Eingriff in die fahrdynamische Einrichtung erlauben. Es können auch Warnmeldungen oder dergleichen erzeugt werden.

Des Weiteren ist in der FIG 2 gezeigt, dass ein Datenpunkt 36 als Eingang für das neuronale Netzwerk 20 fungieren kann, um insbesondere die Vorhersagegüte 32 bestimmen zu können.

FIG 3 zeigt ein schematisches Ablaufdiagramm gemäß einer Ausführungsform des Verfahrens. Das Verfahren ist dabei zum Bestimmen der Vorhersagegüte 32 für den zumindest einen Datenpunkt 36 in einem Eingaberaum für das neuronale Netzwerk 20 ausgebildet. Dabei wird in einem ersten Schritt S1 das auf Basis von Datensätzen 26, 28 trainierte und validierte neuronale Netzwerk 20 vorgegeben. Im zweiten Schritt S2 wird der Datenpunkt 36 vorgegeben. In einem dritten Schritt S3 erfolgt das Bestimmen von zumindest einer Ähnlichkeit des vorgegebenen Datenpunkts 36 mit zumindest einem weiteren Datenpunkt der Datensätze 26, 28. Es erfolgt das Bestimmen von zumindest einem weiteren Datenpunkt der Datensätze 26, 28 in Abhängigkeit von der bestimmten Ähnlichkeit in einem vierten Schritt S4. In einem fünften Schritt S5 wird zumindest der Konfidenzwert 30 des zumindest einen bestimmten weiteren Datenpunkts bestimmt. In einem sechsten Schritt S6 erfolgt wiederum das Bestimmen der Vorhersagegüte 32 für den Datenpunkt 36 in Abhängigkeit von dem zumindest einen bestimmten Konfidenzwert 30 für den zumindest einen weiteren Datenpunkt 36 und in Abhängigkeit von der zumindest einen Ähnlichkeit.

Dabei können, wie bereits erwähnt, Trainingsdatensätze 26 und/oder Validierungsdatensätze 28 als die Datensätze 26, 28 vorgegeben werden. Des Weiteren kann vorgesehen sein, dass ein Abstand des Datenpunkts 36 zum weiteren Datenpunkt und/oder eine Zugehörigkeit des weiteren Datenpunkts 36 zu einem Trainingsdatensatz 26 oder zum Validierungsdatensatz 28 und/oder der Konfidenzwert 30 des weiteren Datenpunkts zur Bestimmung der Ähnlichkeit genutzt werden. Weiterhin kann auch eine Kategorie des Eingaberaums und/oder eine Kritikalität der Datensätze 26, 28 zur Bestimmung der Ähnlichkeit genutzt werden. Weiterhin kann vorgesehen sein, dass eine Vielzahl von weiteren Datenpunkten in Abhängigkeit von der Ähnlichkeit bestimmt wird und eine Vielzahl von jeweiligen Konfidenzwerten 30 bestimmt wird, wobei in Abhängigkeit von der jeweiligen Ähnlichkeit eine Gewichtung der Konfidenzwerte 30 durchgeführt wird und die Vorhersagegüte 32 in Abhängigkeit von dem gewichteten Konfidenzwert 30 bestimmt wird.

Die Vorhersagegüte 32 kann dabei insbesondere mit einem Wert von einschließlich null bis einschließlich eins bestimmt werden.

Des Weiteren kann vorgesehen sein, dass eine Vielzahl von Vorhersagegüten 32 für eine Vielzahl von Datenpunkten 36 bestimmt wird und auf Basis der Vielzahl von Vorhersagegüten 32 eine Gesamtvorhersagegüte 38 für das neuronale Netzwerk 20 bestimmt wird.

Weiterhin kann vorgesehen sein, dass die Bestimmung der zumindest einen Vorhersagegüte 32 mittels zumindest eines weiteren Validierungsdatensatzes validiert wird. Dabei kann als weiterer Validierungsdatensatz ein ungenutzter Teil des Datensatzes 26, 28 verwendet werden. Ferner kann dabei für jedes Datum des weiteren Validierungsdatensatzes zumindest eine Güteprognose und/oder eine Klassifikation und/oder eine Konfidenz der Klassifikation bestimmt werden und auf Basis einer Korrelation dieser bestimmten Werte die Validierung durchgeführt werden.

Insgesamt zeigen somit die Figuren, dass eine lokale Güteprognose, welche vorliegend der Vorhersagegüte 32 entspricht, des neuronalen Netzwerks 20 für spezifische Eingabedaten im Eingaberaum bestimmt werden kann. Es wird damit ein von den vorhandenen Konfidenzwerten 30 weitgehend unabhängiger zusätzlicher Indikator verfügbar. Durch den Vergleich dieser Werte kann das Vertrauen, dass ein Ergebnis des neuronalen Netzwerks 20 korrekt ist, erhöht werden oder umgekehrt auch erkannt werden, dass ein hohes Vertrauen nicht gerechtfertigt ist. Damit kann das Ergebnis entsprechend verwendet werden, um zum Beispiel in sicherheitsrelevanten Anwendungen zielgerichtet zu reagieren und somit die Sicherheit oder Verfügbarkeit zu steigern. Auf Basis der hier beschriebenen lokalen Güteprognose kann durch geeignete Wahl von Datenpunkten 36 innerhalb des Eingaberaums eine globale Güteprognose, mit anderen Worten der Gesamtvorhersagegüte 38, errechnet werden, die gegebenenfalls auch die erwartete Verteilung von Datenpunkten 36 für interessante Anwendungsfälle berücksichtigt.

Insbesondere ist es dafür notwendig, dass ein Distanzmaß auf dem Eingaberaum (ODD) vorhanden ist. Das Training des neuronalen Netzwerks 20 erfolgt dabei nach dem Stand der Technik mittels zumindest eines Trainingsdatensatzes 26. Die Validierung des neuronalen Netzwerks 20 erfolgt nach dem Stand der Technik mittels zumindest eines Validierungsdatensatzes 28. Das neuronale Netzwerk 20 gibt neben dem Klassifikationsergebnis auch den Konfidenzwert 30 auf das Ergebnis zurück. Der Konfidenzwert 30 ist damit für jeden Eingabedatensatz durch die Anwendung des neuronalen Netzwerks 20 ermittelbar. Trainings- und Validierungsdatensatz 26, 28 beinhalten das korrekte Ergebnis, insbesondere den sogenannten Ground Truth. Für jeden Datensatz 26, 28 aus Trainingsdaten und Validierungsdaten ist damit feststellbar, ob er durch das neuronale Netzwerk 20 korrekt oder falsch klassifiziert wurde.

Ziel des Verfahrens ist es dabei, für den Datenpunkt 36 des Eingaberaums eine Bewertung des zu erwartenden Vertrauens durchzuführen, mit der das Ergebnis korrekt ist.

Dabei wird insbesondere der Datenpunkt 36 im Eingaberaum festgelegt. Die Menge der bewertungsrelevanten Punkte aus den Datensätzen 26, 28 wird ermittelt, die für die Bewertung genutzt werden sollen. Beispielsweise kann auf Basis eines Distanzmaßes im Eingaberaum alle Datenpunkte des Validierungsdatensatzes 28 innerhalb eines definierten Abstands ausgewählt werden. Die bekannten Ergebnisse der bewertungsrelevanten Punkte (weitere Datenpunkte) können genutzt werden, um eine Prognose für die zu erwartende Güte des neuronalen Netzwerks 20 zu erhalten. Dabei können die jeweiligen Ergebnisse der bewertungsrelevanten Punkte unter Berücksichtigung von Abstand, Konfidenz, Ursprung sowie weiterer geeigneter Kriterien gewichtet werden. Es wird dann die Vorhersagegüte 32, insbesondere normiert zwischen null und eins, für diesen Datenpunkt 36 des Eingaberaums ermittelt.

Eine Validierung der Vorhersagegüte 32 ist anhand eines weiteren Datensatzes durch statistische Tests möglich. Hierfür kann beispielsweise zu Beginn des Verfahrens ein geeigneter Teil des Validierungsdatensatzes 28 zurückgehalten werden oder ein weiterer Datensatz geeignet erzeugt werden. Zur Validierung wird für jedes Datum des weiteren Validierungsdatensatzes eine Güteprognose beziehungsweise Einstufung, eine Klassifikation zu korrekt beziehungsweise nicht korrekt, sowie eine Konfidenz des neuronalen Netzwerks 20 bei Klassifikation bestimmt. Nun kann eine Korrelation aus der Einstufung der Güteprognose und korrekter Klassifikation ermittelt werden beziehungsweise auch aus der Einstufung der Güteprognose und Konfidenz eine Korrelation durchgeführt werden, um sicherzustellen, dass die Güteprognose die gewünschten Eigenschaften hat.

Alternativ können auch die Schwellwerte zur Einstufung der Güteprognose anhand dieses Datensatzes optimiert werden.

## Patentansprüche

1. Verfahren zum Bestimmen zumindest einer Vorhersagegüte (32) für zumindest einen Datenpunkt (36) in einem Eingaberaum für ein neuronales Netzwerk (20) mittels einer elektronischen Recheneinrichtung (18), mit den Schritten:
- Vorgeben des auf Basis von Datensätzen (26, 28) trainierten und validierten neuronalen Netzwerks (20); (S1)
- Vorgeben des zumindest einen Datenpunktes (36); (S2)
- Bestimmen von zumindest einer Ähnlichkeit des vorgegebenen Datenpunktes (36) mit zumindest einem weiteren Datenpunkt der Datensätze (26, 28); (S3)
- Bestimmen von zumindest einem weiteren Datenpunkt der Datensätze (26, 28) in Abhängigkeit von der bestimmten Ähnlichkeit; (S4)
- Bestimmen von zumindest einem Konfidenzwert (30) des zumindest einen bestimmten weiteren Datenpunkts; (S5)
- Bestimmen der Vorhersagegüte (32) für den zumindest einen Datenpunkt (36) in Abhängigkeit von dem zumindest einem bestimmten Konfidenzwert (30) für den zumindest einen weiteren Datenpunkt und in Abhängigkeit von der zumindest einen Ähnlichkeit. (S6)

2. Verfahren nach Anspruch 1, **dadurch gekennzeichnet, dass**
Trainingsdatensätze (26) und/oder Validierungsdatensätze (28) als die Datensätze (26, 28) vorgegeben werden.

3. Verfahren nach Anspruch 1 oder 2, **dadurch gekennzeichnet, dass** ein Abstand des Datenpunkts (36) zum weiteren Datenpunkt und/oder eine Zugehörigkeit des weiteren Datenpunkts zu einem Trainingsdatensatz (26) oder zu einem Validierungsdatensatz (28) und/oder ein Konfidenzwert (30) des weiteren Datenpunkts zur Bestimmung der Ähnlichkeit genutzt werden.

4. Verfahren nach einem der vorhergehenden Ansprüche, **dadurch gekennzeichnet, dass** eine Kategorie des Eingaberaums und/oder eine Kritikalität der Datensätze (26, 28) zur Bestimmung der Ähnlichkeit genutzt werden.

5. Verfahren nach einem der vorhergehenden Ansprüche, **dadurch gekennzeichnet, dass** eine Vielzahl von weiteren Datenpunkten in Abhängigkeit von der Ähnlichkeit bestimmt wird und eine Vielzahl von jeweiligen Konfidenzwerten (30) bestimmt wird, wobei in Abhängigkeit von der jeweiligen Ähnlichkeit eine Gewichtung der Konfidenzwerte (30) durchgeführt wird, und die Vorhersagegüte (32) in Abhängigkeit von den gewichteten Konfidenzwerten (30) bestimmt wird.

6. Verfahren nach einem der vorhergehenden Ansprüche, **dadurch gekennzeichnet, dass** die Vorhersagegüte (32) mit einem Wert von einschließlich 0 bis einschließlich 1 bestimmt wird.

7. Verfahren nach einem der vorhergehenden Ansprüche, **dadurch gekennzeichnet, dass** eine Vielzahl von Vorhersagegüten (32) für eine Vielzahl von Datenpunkten (36) bestimmt wird und auf Basis der Vielzahl von Vorhersagegüten (32) eine Gesamtvorhersagegüte (38) für das neuronale Netzwerk (20) bestimmt wird.

8. Verfahren nach einem der vorhergehenden Ansprüche, **dadurch gekennzeichnet, dass** die Bestimmung der zumindest einen Vorhersagegüte (32) mittels zumindest eines weiteren Validierungsdatensatzes validiert wird.

9. Verfahren nach Anspruch 8, **dadurch gekennzeichnet, dass**
als weiterer Validierungsdatensatz ein ungenutzter Teil des Datensatzes (26, 28) verwendet wird.

10. Verfahren nach Anspruch 8 oder 9, **dadurch gekennzeichnet, dass** für jedes Datum des weiteren Validierungsdatensatzes zumindest eine Güteprognose und/oder eine Klassifikation und/oder eine Konfidenz der Klassifikation bestimmt wird und auf Basis einer Korrelation dieser bestimmten Werte die Validierung durchgeführt wird.

11. Verfahren nach einem der vorhergehenden Ansprüche, **dadurch gekennzeichnet, dass** das neuronale Netzwerk (20) für eine Objekterkennung bereitgestellt wird.

12. Verfahren nach Anspruch 11, **dadurch gekennzeichnet, dass** das neuronale Netzwerk (20) für eine Objekterkennung auf einem beweglichen Trägersystem, insbesondere für ein Kraftfahrzeug, insbesondere für einen Zug (10), bereitgestellt wird.

13. Computerprogrammprodukt mit Programmcodemitteln, welche eine elektronische Recheneinrichtung (18) dazu veranlassen, wenn die Programmcodemittel von der elektronischen Recheneinrichtung (18) abgearbeitet werden, ein Verfahren nach einem der Ansprüche 1 bis 12 durchzuführen.

14. Computerlesbares Speichermedium mit zumindest einem Computerprogrammprodukt nach Anspruch 13.

15. Elektronische Recheneinrichtung (18) zum Bestimmen zumindest einer Vorhersagegüte (32) für zumindest einen Datenpunkt (36) in einem Eingaberaum für ein neuronales Netzwerk (20), wobei die elektronische Recheneinrichtung (18) zum Durchführen eines Verfahrens nach einem der Ansprüche 1 bis 12 ausgebildet ist.
